(19) Europäisches Patentamt
European Patent Office
Office européen des brevets

(11) **EP 0 581 255 B1**

(12) **EUROPEAN PATENT SPECIFICATION**

(45) Date of publication and mention
of the grant of the patent:
**07.04.1999 Bulletin 1999/14**

(51) Int Cl.[6]: **G09G 3/36**

(21) Application number: **93112012.5**

(22) Date of filing: **27.07.1993**

(54) **A method of driving display element and its driving device**

Verfahren und Einrichtung zum Steuern eines Flüssigkristallanzeigeelements

Méthode et dispositif de commande d'un élément d'affichage à cristaux liquides

(84) Designated Contracting States:
**DE FR GB IT**

(30) Priority: **29.07.1992 JP 222053/92**
**11.09.1992 JP 269560/92**
**09.02.1993 JP 44565/93**

(43) Date of publication of application:
**02.02.1994 Bulletin 1994/05**

(73) Proprietor: **ASAHI GLASS COMPANY LTD.**
**Chiyoda-ku Tokyo 100 (JP)**

(72) Inventors:
- **Kuwata, Takeshi, AG Technology Co., Ltd.**
  **Yokohama-shi, Kanagawa-ken (JP)**
- **Ruckmongathan, Temkar N.,**
  **Asahi Glass Company Ltd.**
  **Yokohama-shi, Kanagawa-ken (JP)**
- **Nakagawa, Yutaka, AG Technology Co., Ltd.**
  **Yokohama-shi, Kanagawa-ken (JP)**
- **Koh, Hidemasa, AG Technology Co., Ltd.**
  **Yokohama-shi, Kanagawa-ken (JP)**
- **Nakazawa, Akira, AG Technology Co., Ltd.**
  **Yokohama-shi, Kanagawa-ken (JP)**

(74) Representative:
**Wächtershäuser, Günter, Prof. Dr.**
**Patentanwalt,**
**Tal 29**
**80331 München (DE)**

(56) References cited:
**EP-A- 0 507 061          EP-A- 0 522 510**

- **INSTITUTE OF ELECTRICAL AND ELECTRONICS ENGINEERS 'Conference record of the 1988 international display research conference' 1988 , IEEE , NY * page 80 - page 85; figures 1,2 ***
- **SID 95 DIGEST, 22.1 : Y. Hirai et al. : "A Color STN-LCD for Video Display Using Amplitude-Modulation MLS Technolgy", 1995 SID, pages 339-342, ISSN0097-0966X/95/2601-0339-$1.00 + .00**

**Description**

The present invention relates to a method of gray-shade-driving a display element such as a fast responding liquid crystal display element and its device.

In recent years, liquid crystal display elements have been noted as devices which are thin, light, compact and capable of displaying a large capacity of information, in place of CRTs. As liquid crystal display elements, they are mainly classified into two devices wherein each pixel of a twisted nematic (TN) type liquid crystal display element is driven by a thin-film transistor which is disposed in correspondence to each of the pixels, and a twisted nematic (TN) type or a super-twisted nematic (STN) type liquid crystal display element is driven without using a thin-film transistor (a simple matrix type).

There is a problem in the liquid crystal display element employing the thin-film transistor, wherein manufacturing steps for preparing the element are complicated and manufacturing cost is high. On the other hand, there is a problem in the simple matrix type liquid crystal display element, wherein they are not suitable for a multi-level gray shade display, although the manufacturing steps of the element are comparatively simple.

The driving of the conventional simple matrix type liquid crystal display element is performed by a so-called frame modulation or pulse-width modulation. In case of the frame modulation, low frequency components of a driving waveform increases and flickers are apt to generate. Further, in case of the pulse-width modulation, high frequency components of a driving waveform increase and a nonuniformity of display is apt to generate.

In the document IEEE, "Conference record of the 1988 international display research conference", 1988, IEEE, NY, US, pages 80-85, a new addressing technique in which more than one address line is selected simultaneously is disclosed. The described addressing technique requires a lower supply voltage an gives better brightness uniformity of pixels compared to the other known techniques.

A method for generating a large number of gray shades in rms responding matrix LCDs is proposed in the present invention which shall be referred to as AMPLITUDE MODULATION.

It is an object of the present invention to solve the above problems and to provide the following method of driving a display element and driving device of a display element.

In general, it is necessary to change the rms voltage across a pixel to achieve gray shades in a display.

The rms voltage across a pixel can be changed by varying the amplitude of the column voltage. However, this results in changing the rms voltage across all the pixels in that column. It is important to note that the amplitude of column voltage is same while the polarity with respect to row select pulse is changed depending on the data in the conventional technique. This ensures that rms voltage across a pixel is independent of the data displayed in a column.

In the present invention, the amplitude of the column voltage is selected to change the rms voltage across a pixel. However, the choice of column voltage is such that the rms voltage across pixels in the unselected rows is constant in a cycle and is independent of the data displayed.

The present invention comprises a method having the features of claim 1 and a device having the features of claim 6. The dependent claims concern preferred embodiments of the invention.

A specific explanation will be given to the present invention. First, an explanation will be given of a gray-shade-driving in case of the traditional optimized amplitude selective addressing method for driving a simple matrix type liquid crystal display element.

There is a case wherein a reference level of voltage is shifted for each frame, to lower a driving voltage as a whole. This is a so-called IAPT method: see for instance, H. Kawakami, Y. Nagae and E. Kaneko, "Matrix Addressing Technology of Twisted Nematic Liquid Crystal Display", SID-IEEE Record of Biennial Display Conference p.50-52, 1976). However, an explanation will be given mainly to a case wherein the reference level is not shifted, for simplicity in this specification. (This is the so-called APT method; see for instance, Alt, P.M. and Pleshko, P., "Scanning Limitations of Liquid Crystal Displays", IEEE Trans. ED, Vol. ED21, pp.146-155, 1974). However, the application to the IAPT method can be performed extremely easily by regarding an application voltage in the APT method as a voltage amplitude from a changing intermediate voltage.

In this case, assuming an absolute value of a selection voltage of a row electrode as $V_r$ ($V_r > 0$) and a non-selection voltage as 0, a voltage of $V_r$ or $-V_r$ is applied on the row electrode.

On the other hand, a gray shade level of display is indicated by $g_1$, where $g_1$ is provided with a value between 1 showing an off state and -1 showing an on state in accordance with a degree of gray shade. For instance, in case of four gray shades, $g_1$ is provided with -3/3, - 1/3, 1/3 and 3/3. Further, in case of 16 gray shades, $g_1$ is provided with -15/15, -13/15, ..., 13/15 and 15/15. However, in a general liquid crystal display element, the voltage-light transmittance curve is not a straight line. It often is not preferable to distribute values of $g_1$ at uniform intervals. It is preferable to suitably set the intervals between respective gray shades in accordance with the voltage-light transmittance curve.

When the first method of the present invention is applied to the APT method, it is preferable to prepare two kinds of voltages which are to be supplied to column electrodes, in case wherein the row electrodes are provided with a constant $V_r$.

Row select time is split into two equal time intervals. Column voltage is proportional to $(g_1 + k)$ in one of the time intervals and $(g_1 - k)$ in the other time intervals for the row selection voltage $V_r$, where $k^2 = 1 - g_1^2$. Polarities of row and column voltages are changed to achieve dc free operation. Further, the constant of proportion is suitably selected such that the contrast ratio is maximized in accordance with characteristics of a liquid crystal element.

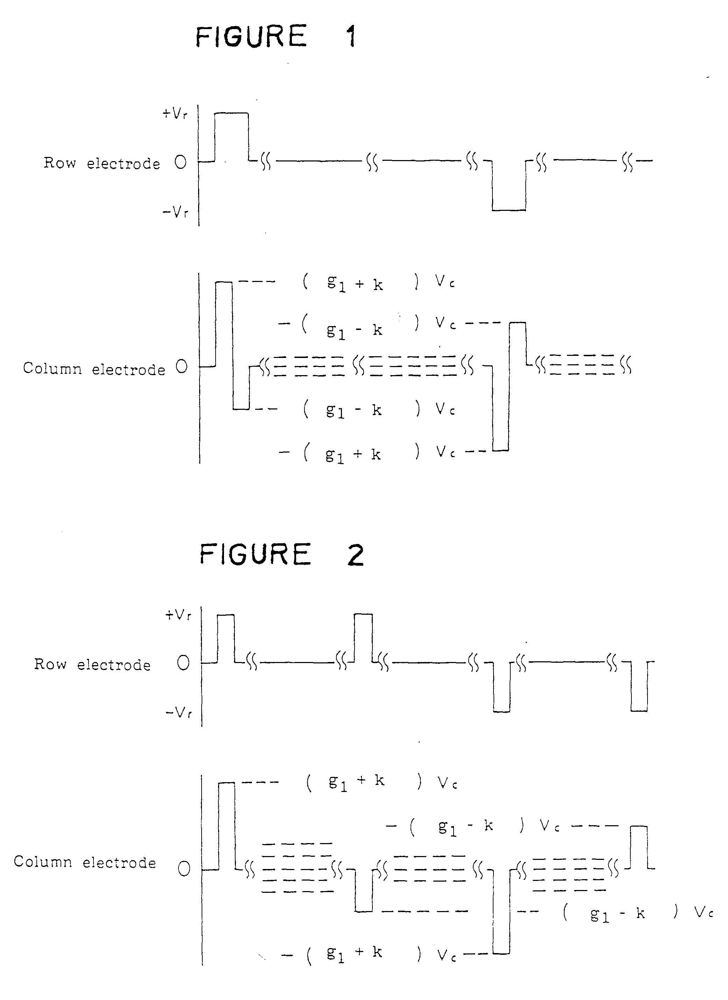

The above two kinds of voltages are successively applied on the side of column electrodes. However, the timing and the order of application can freely be changed in this invention. For instance, as shown in Figure 1, $(g_1 + k)$ and $(g_1 - k)$ with respect to $V_r$ may successively be applied, and as shown in Figure 2, only one of them may be applied and the other one may be applied after scanning all of the row electrodes. $V_c$ is a constant of proportion in Figures 1 and 2.

The applicants have already proposed a method of driving a fast responding liquid crystal display element wherein the relaxation phenomena of liquid crystal is restrained and the contrast ratio is prevented from lowering, by simultaneously selecting a plurality of row electrodes and by dispersing selection pulses in a single display cycle. See for instance, European Patent Application EP-A-0 522 510 which is only relevant for the purposes of Article 54(3) EPC. Hereinafter, this method is called MLS (multi line selection) method.

In this specification, "a cycle" means minimum number of time interval necessary for addressing and dc free operation.

The method of this invention is a MLS method. As far as this method is concerned, the European Patent Application EP-A-0 507 061, being only relevant for the purposes of Article 54(3) EPC, provides background information useful for understanding the invention. The MLS method is generalized as follows. In the MLS method, a row electrode subgroup consisted of L pieces of row electrode is summerizingly selected.

(1) An orthogonal matrix A having L row components and K column components, of which element is composed of +1 corresponding to the voltage $+V_r$ or -1 corresponding to the voltage $-V_r$, is selected as a selection voltage matrix.

(2) In selecting a j-th row electrode subgroup, a voltage is applied such that an element of a column vector of the selection voltage matrix (hereinafter, selection voltage vector) corresponds to a voltage amplitude at row electrodes constituting the j-th row electrode subgroup. The voltage application is performed with respect to all of the selection voltage vectors.

The group of row electrodes which are simultaneously selected, is called "a row electrode subgroup". It is preferable to have the same numbers of row electrodes constituting the row electrode subgroups. However, when it is not possible to have the same numbers of the row electrodes constituting the respective row electrode subgroups when the total number of rows is not an integral multiple of L, the driving may be performed by assuming dummy row electrodes, such that numbers of row electrodes which are incorporated in all the row electrode subgroups are regarded as equal.

A liquid crystal display element should preferably have short response time (typically 50 msec or less). The liquid crystal display element having a short response time can be provided by reducing a thickness d of a liquid crystal layer, as well as employing a liquid crystal having a low viscosity and a large anisotropy of the refractory index. As a material of liquid crystal which satisfies the above conditions, a tolan species (Japanese Unexamined Patent Publication No. 5631/1986), a difluorostilbene species (Japanese Unexamined Patent Publication No. 96475/1989) or the like is pointed out.

The voltage applied to the row electrode is provided with either one of voltage levels of $+V_r$ and $-V_r$ $(V_r > 0)$ in selection time, when the voltage in non-selection time is determined to be 0. In this case, the voltage 0 in non-selection time does not necessarily mean the grounding to the earth. The driving voltage of the liquid crystal element is determined by a voltage (potential difference) applied between a row electrode and a column electrode, and the potential difference between the both electrodes does not change even when the potentials of the both electrodes are simultaneously changed by the same amounts.

The voltage in selection time which is applied to a specified row electrode subgroups, is expressed by a group wherein vectors having L pieces of elements which are the voltages applied to respective row electrodes are arranged sequentially or over time. This vector is designated by "selection voltage vector". Further, a matrix including the selection voltage vectors as its column components, is designated by "selection voltage matrix".

An orthogonal matrix is selected as the selection voltage matrix of which element is basically composed of +1 corresponding to the voltage $+V_r$ or -1 corresponding to the voltage $-V_r$. The number of row components of the selection voltage matrix is equal to the number of row electrodes included in the row electrode subgroup, whereas the number of column components is equal to the number of selection pulses included in a single display cycle. When the number of column components is too large, the number of selection pulses necessary for a single display cycle in selecting of the row electrode becomes large. Therefore, the number of column components is preferably a minimum value among possible values. Further, when the selection voltage applied to the respective column electrodes is not an alternate current voltage, it is possible to make the selection voltage an alternate current voltage by employing an orthogonal matrix -A in succession to the orthogonal matrix A and by driving the respective column electrodes by regarding the combination of matrices to be the selection voltage matrix as a whole.

Further, it is considerably effective to adopt especially Hadamard's matrix as the selection voltage matrix, in order to restrain a nonuniformity of display caused by a frequency dependency of a liquid optical display's threshold voltage. The order of the sequential arrangement of the selection voltage vector which is employed in the driving, is arbitrary, and it is possible to shift or switch the selection voltage vectors with respect to each row electrode subgroup, or each display data. It is often preferable to drive the liquid crystal by suitably performing the above switching, in order to restrain the nonuniformity of display in the actual driving.

Similarly, the different orthogonal matrices which are obtained by interchanging the row components of the selection voltage matrix A can be employed in a successive display cycle, to reduce the nonuniformity of display.

In summary, the above driving method is provided with the following characteristics.

(1) Row electrodes are classified into a plurality of row electrode subgroups composed of L row electrodes which are selected simultaneously wherein L is an integer greater than 1.

(2) A signal [$\alpha_{mn}$] of an orthogonal function wherein $\alpha_{mn}$ designates an element of a m-th row component and a n-th column component of an orthogonal matrix, m is an integer of 1 through L and n is a suffix showing that the n-th column component of the orthogonal matrix corresponds to a n-th selection signal in a single display cycle, is applied on a selected row electrode as a row electrode signal.

(3) A signal to which an image signal with respect to positions of the selected row electrodes on a display panel is converted by the orthogonal function, is applied on the column electrode as a column electrode signal.

Next, the timings wherein the selection pulses designated by the selection voltage vectors constructed as above are applied on the respective row electrode, will be explained as follows.

The prevention of a frame response (relaxation phenomena of a liquid crystal) in a liquid crystal element having a fast response can be performed by shortening a length of non-selection time period in row waveforms, by dispersing the selection pulses in a single display cycle. Generally speaking, it is more effective to prevent the relaxation phenomena of a liquid crystal by selecting the successive row electrode subgroups sequentially one after another.

Hereinafter, the orthogonal matrix A is designated by [$\alpha_{mn}$] to clarify the expression. $\alpha_{mn}$ designates an element of a m-th row component and a n-th column component of this orthogonal matrix. m is an integer of 1 through L. n is a suffix showing that the above expression corresponds to a n-th selection signal in one display cycle. According to this expression, an i-th row is selected by applying a voltage of $V_r \cdot \alpha_{in}$ ($V_r$ is a positive number) by expanding it in the time axis with respect to each n. That is to say, the row electrode is applied with the voltage of $V_r \cdot \alpha_{in}$ with respect to the selection voltage, in selection time.

On the other hand, the gray shade level of display of an element at a k-th column and an i-th row in a j-th row electrode subgroup (j is an integer of 0 through J-1), is designated as $d_{(j \cdot L+i),k}$. $d_{(j \cdot L+i),k}$ is provided with normalized values between 1 showing an off state and -1 showing an on state in accordance with the levels of gray shade. For instance, in case of 4 levels of gray shades, it can be provided with -3/3, -1/3, 1/3 and 3/3, and in case of 16 levels of gray shades, -15/15, -13/15, ... 13/15 and 15/15. However, in a general liquid crystal display element, it is often not preferable to uniformly distribute the values of $d_{(j \cdot L+i),k}$, since the voltage-light transmittance curve is not a straight line. It is preferable to select the value of $d_{(j \cdot L+i),k}$ depending on the voltage-light transmission curve to achieve the necessary light transmission for each and every gray shade level.

According to a reference method, which provides a better understanding of the method of the present invention, a voltage is applied on the column electrode which is proportional to a voltage expressed by the following equation (8) to display data designated by $d_{(j \cdot L+i),k}$.

$$V_{c,n} = \sum_{i=1}^{L} [\alpha_{in} d_{(j \cdot L+i),k}] \pm (L - \sum_{i=1}^{L} |d_{(j \cdot L+i),k}|^2)^{1/2} \qquad (8)$$

It can be considered that the row electrode subgroup is driven by adding an imaginary row (a 0-th row), when the left hand side of the following equation (9) is regarded as data corresponding to the imaginary 0-th row.

$$(L-\sum_{i=1}^{L} |d_{(j\cdot L+i),k}|^2)^{1/2} = d_{(j\cdot L+0),k} \qquad (9)$$

± in (8) is determined so that a new selection voltage matrix is provided with the orthogonality.

That is to say, the equation (8) can be rewritten as follows, by putting the new selection voltage matrix having the 0-th row as $[\alpha_{mn}']$.

$$V_{c,n} = \sum_{i=0}^{L} [\alpha'_{in} d_{(j\cdot L+i),k}] \qquad (10)$$

For instance, when L=7, an orthogonal matrix A can be selected by determining K as K=8. As a representative example, a matrix of 7 rows and 8 columns as shown in Table 1 is exemplified wherein an arbitrary single row is eliminated from a so-called Hadamard's matrix of order 8. In this case, the first row wherein all the elements are provided with 1, is eliminated from the Hadamard's matrix of order 8.

Table 1

$$A_1 = \begin{bmatrix} 1 & -1 & 1 & -1 & 1 & -1 & 1 & -1 \\ 1 & 1 & -1 & -1 & 1 & 1 & -1 & -1 \\ 1 & -1 & -1 & 1 & 1 & -1 & -1 & 1 \\ 1 & 1 & 1 & 1 & -1 & -1 & -1 & -1 \\ 1 & -1 & 1 & -1 & -1 & 1 & -1 & 1 \\ 1 & 1 & -1 & -1 & -1 & -1 & 1 & 1 \\ 1 & -1 & -1 & 1 & -1 & 1 & 1 & -1 \end{bmatrix}$$

When the matrix $A_1$ is employed as the selection voltage matrix, a selection voltage matrix $A_1'$ added with the imaginary row, is formed firstly by replacing the eliminated first row. Further, the selection signal is converted to an alternate current one by arranging $A_1'$ and $-A_1'$ into a single selection matrix, since the selection signal does not satisfy the dc free condition, in case wherein the selection matrix is $A_1'$. In this case, column voltage corresponding to $-A_1'$ is of the same amplitude and opposite sign to the column voltage corresponding to $A_1'$.

In this way, very many levels of gray shade display can be provided to the MLS method which is suitable for the fast responding LCDs, without substantially changing the frequency components of the driving waveform.

When $L=2^p$ (p is a positive integer), the size of the selection voltage matrix should be increased, to 2×L columns as explained earlier in order to accommodate the imaginary row.

Further, it is necessary to increase the size of the selection voltage matrix, in case of $L=2^p-1$ (p is an integer greater than 1), in order to meet the dc free condition.

The minimum necessary number of the selection pulses for performing a single display cycie, is $2^p$, in case of $L=2^p-2$ (p is an integer greater than 2), even when the dc free condition is considered, which is the same as in the MLS method for the bi-level display.

In this case, it is not necessary to perform the switching of the display data $D_j$ at a timing wherein all the selection voltage vectors constituting the selection voltage matrix have been applied on the electrodes. That is to say, the display data $D_j$ may be switched while the selection voltage vectors of the selection voltage matrix are successively applied on the electrodes (during a single display cycle). In such a case, more or less direct current components may be superposed on the driving signal, which is not often a big problem as a whole.

In this invention, as the selection voltage matrix, the selection voltage vectors constituting the selection voltage matrix may be selected so as to include all the possible kinds of selection voltage vectors. In this case, for instance, when L=8, K is $2^8$=256.

In this invention, when J=1, this is the case wherein all the row electrodes are simultaneously selected. Such a case has a merit wherein the voltage applied to the row electrode is provided with two levels, since there is no non-selection period. However, it is preferable to simultaneously select a suitable number of plural rows and scan them as above, since the hardware is extremely complicated, when J=1.

In order to simplify the driving circuit, it is preferable that the numbers of the row electrodes constituting the row electrode subgroups are all equal, in the driving method of this invention. Naturally, in the general cell construction, the total number of row electrodes is not always a multiple of the number of the row electrodes constituting the row electrode subgroup. Therefore, there is a case wherein it is not possible to equalize all the numbers of the row electrodes constituting the respective row electrode subgroups.

It is possible to drive voltages applied on the row electrodes and the column electrodes in the above case as in the case wherein the number of the row electrodes constituting the row electrode subgroup is L, by driving them by adding imaginary row electrodes of $(L-L_r)$, with respect to a portion composed of a row electrode subgroup consisted of row electrodes of $L_r$ the number of which is smaller than that of the other row electrode subgroups consisted of row electrodes of L.

That is to say, in case of driving the row electrode subgroup consisted of $L_r$ pieces of row electrodes, $(L-L_r)$ pieces of imaginary row electrodes corresponding to $L_r$-th, $(L_r+1)$-th, ... L-th row electrodes, are imaginarily considered and the driving is performed by imaginarily selecting the display data on the imaginary row electrodes.

The method of the present invention is applied to the MLS method as follows.

In this case, voltages which are in proportion to two kinds of voltages expressed by the following two equations are applied on the column electrodes, to display data represented by $d_{(j \cdot L+i),k}$.

$$V_{d1,n} = \sum_{i=1}^{L} [\alpha_{in}(d_{(j \cdot L+i),k} + (1-d_{(j \cdot L+i),k}{}^2)^{1/2})] \quad (11)$$

$$V_{d2,n} = \sum_{i=1}^{L} [\alpha_{in}(d_{(j \cdot L+i),k} - (1-d_{(j \cdot L+i),k}{}^2)^{1/2})] \quad (12)$$

In the following, a period wherein a voltage designated by $V_{d1,n}$ is applied on the column electrode is defined as a first time slot, whereas a period wherein a voltage designated by $V_{d2,n}$, a second time slot. The order of application of the voltage corresponding to each time slot is arbitrary. It is preferable to disperse the two time slots in two display cycles to avoid the relaxation phenomena of a liquid crystal. Accordingly, it is preferable not to apply the selection pulses successively during the first and second time slots, and to perform a voltage application corresponding to the second time slot after selecting all the row electrode subgroups with voltage corresponding to the first time slot.

In the method of the present invention, in order to meet the dc free condition in a cycle, it is necessary to increase the size of selection voltage matrix, when the number L of the simultaneously selected row electrodes is, $L=2^p$ (p is a positive integer).

In case of $L=2^p-1$ (p is an integer greater than 1), the minimum necessary number of the selection pulses for performing a single display cycle is $2^p$, even when the dc free condition is considered, which is the same as in the MLS method in case wherein the gray shade display is not performed.

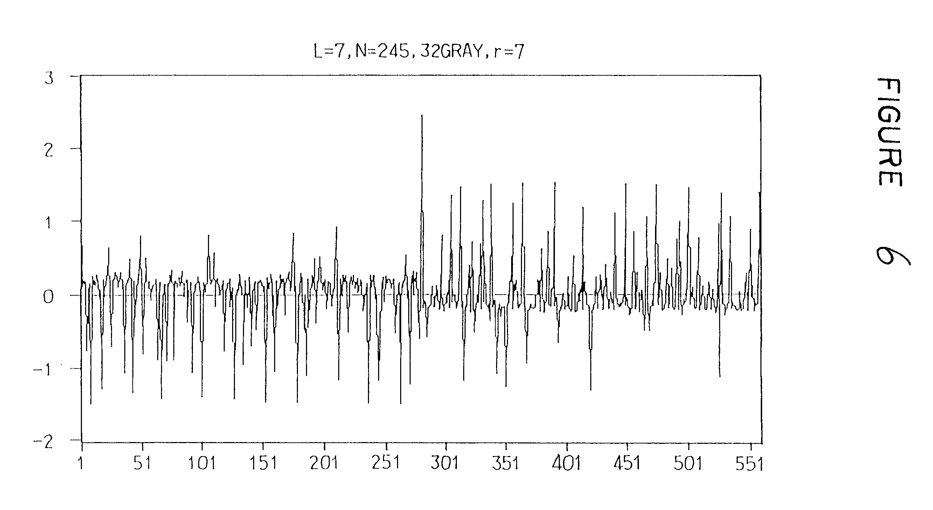

An example of a voltage applied on a liquid crystal, that is, a difference between a row electrode voltage and a column electrode voltage is shown for a pixel driven to 7th gray level from the off-state in Figure 6, with respect to the method of the present invention. The abscissa is time and the ordinate is voltage, each of which is provided with an arbitrary unit. The number of row electrodes in a row electrode subgroup is seven and the display is provided with 32 gray shades as a total.

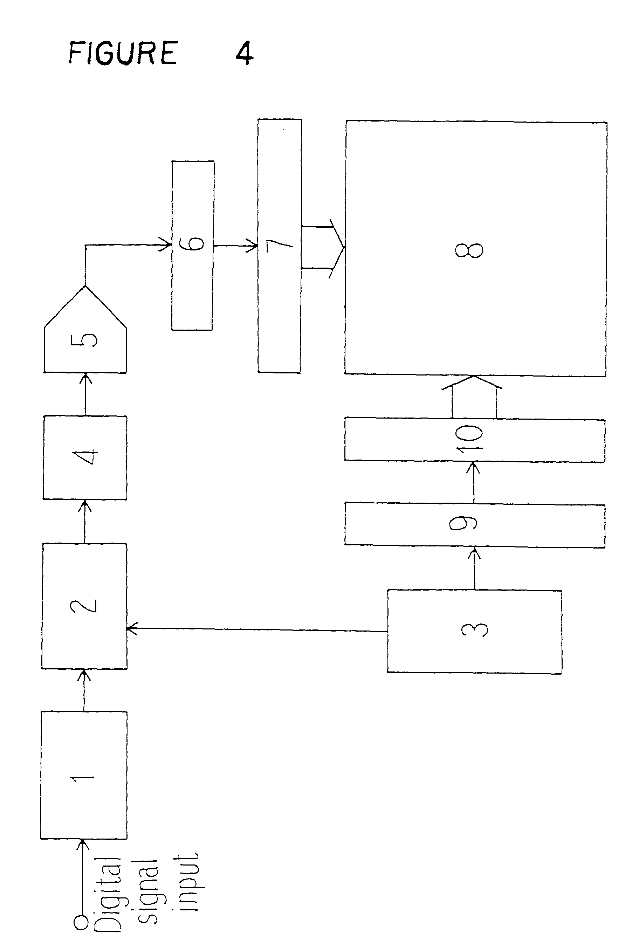

Figure 4 shows an example of a circuit which is adopted to achieve the driving method of this invention.

Respective display data of R, G and B are inputted to a frame buffer memory 1 as input signals in digital forms. The display data on row electrode subgroups selected from the frame buffer memory 1 are sent to a column signal generator 2. Further, a predetermined row electrode selection pattern is sent from a row electrode sequence generator 3 to the column signal generator 2.

The column signal generator 2 performs a calculation based on the display data and the row electrode selection pattern thereby forming a column voltage, the arrangement of which is changed to a format which is suitable for transferring the data to a display panel by the buffer memory and a data formatter 4 and thereafter, the column voltage is sent to a D-A converter 5.

The display data converted from digital to analog at the D-A converter 5 is converted to an offset value and an amplitude which are suitable for an LCD driving by an offset and gain corrector 6 and sent to an analog type column driver 7. The outputs of the column driver are respectively connected to column input terminals of an LCD 8.

On the other hand, an output of the row electrode selection sequence generator 3 is also sent to a row electrode selection sequencer 9, wherein a timing thereof is adjusted to that of the display data on the row side and the output is sent to a row driver 10. The outputs of the three-level row driver 10 are respectively connected to row input terminals of the LCD 8.

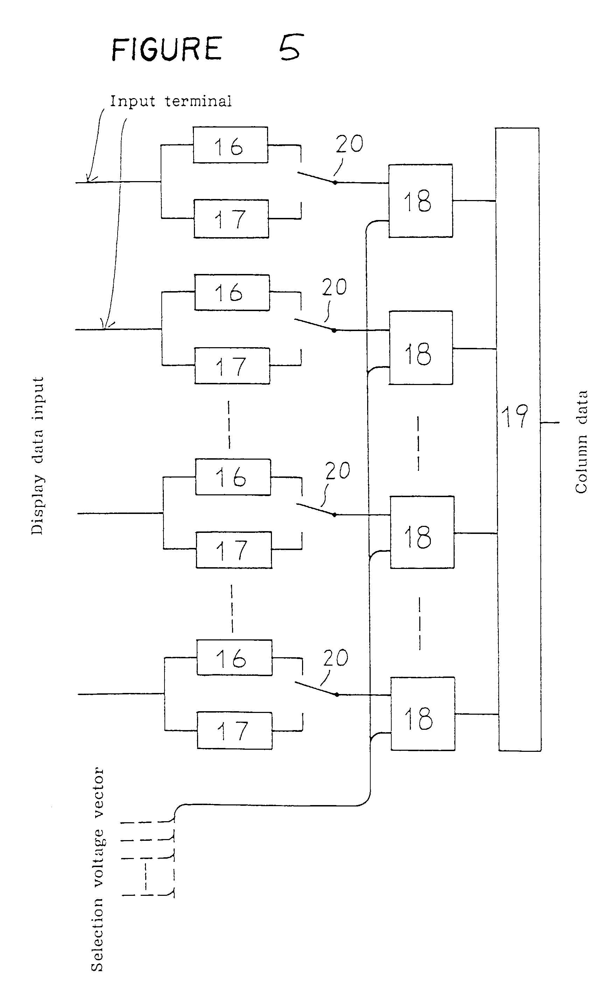

Figure 5 shows the circuit construction of the column signal generator 2 for performing the method of this invention with respect to the MLS method. L pieces of the display data $d_{(j \cdot L+i),k}$ (i=1, 2, ... L) in the j-th row subgroup, at the k-th column are respectively inputted to the display data input terminals of the column signal generator 2. The display data is inputted to sign determinaters 18 through switching means 20, after the display data are performed with a predetermined calculation by function generators 16 and 17.

The function generator 16 converts the display data to $F_{11}$ through $F_{L1}$ respectively. The function generator 17 converts the display data to $F_{12}$ through $F_{L2}$, where

$$F_{i1} = d_{(j \cdot L+i),k} + (1-d_{(j \cdot L+i),k}^{2})^{1/2} \tag{16},$$

$$F_{i2} = d_{(j \cdot L+i),k} - (1-d_{(j \cdot L+i),k}^{2})^{1/2} \tag{17}.$$

The output of the function generator 16 is applied to the first time slot and the output of the function generator 17 is applied to the second time slot. The application may be performed in the reversed order. Although the time intervals of the two time slots should be equal, it is not necessary to apply the outputs successively during the two time slots, and the input switching may be performed every time the selection is finished on J pieces of the row electrode subgroups.

The function generators 16 and 17 may be constructed by random logic gates, and the switching means 20 can employ AND-OR gates. On the other hand, the calculation results of the function generators 16 and 17 may be stored into a ROM as a table, and the outputs of the function generators 16 and 17 may be selected by switching the address of the ROM in reading. According to the former, a higher-speed operation can be performed and according to the latter, a more simple hardware can be achieved.

Selection voltage vector is one of the inputs to each of L pieces of the sign determinaters 18 while the calculation results are the other input. The sign determinaters 18 perform the data treatment such that an addition is performed when the selection voltage vector is +1 and a subtraction is performed when the selection voltage vector is -1, and the outputs of the sign determinaters are the inputs of the adder 19. Thus the adder 19 performs the addition and subtraction of L pieces of the data and outputs the calculation results as the column electrode signal. A single display cycle is finished after performing the above calculation with respect to the selection voltage vectors the number of which is that of the column components of the selection voltage matrix. It is possible to further apply signals wherein the signs of the row voltage output and the column voltage output are reversed, if necessary.

The main advantage of this invention is a flicker free operation even in case of a large number of gray shade display as compared to the frame rate control method.

The method of this invention may comprise the step that a correction voltage which is applied dispersingly on L electrodes in the row electrode subgroup, such that the rms voltage applied across the pixel in the non-selected rows is independent of the display data. That is to say, the correction voltage is applied on the electrodes sequentially during the first time slot and the second time slot, and therefore, the length of sequence is doubled. However, the invention is provided with an advantage of simplifying the circuit structure, wherein time necessary for generation of column voltage is short.

In the drawings:

Figure 1 shows an example of driving waveforms when amplitude modulation is applied to an APT;
Figure 2 shows another example of driving waveforms when amplitude modulation is applied to an APT;
Figure 3 shows graphs of the voltage-light transmittance-applied voltage curve according to the invented method;
Figure 4 shows an example of a block diagram of a circuit for achieving the invented method;

Figure 5 is a block diagram showing an example of a column signal generating circuit for achieving the second method of this invention;

Figure 6 shows an example of a voltage waveform applied on a liquid crystal according to the second method of this invention; and

Figure 7 is an explanatory diagram showing a response time of an LCD.

EXAMPLE

EXAMPLE 1

An STN liquid crystal display element having an average response time of 50 msec (at 25°C) between on and off states, is driven by the driving method of this invention employing the circuit structure of Figures 4 and 5, wherein L=7, J=35 and K=8, and hence the total number of row electrodes (N) is equal to 245.

A selection voltage matrix is employed wherein the matrix $A_1$ shown in Table 1 and a matrix $-A_1$ wherein the sign of the element is reversed from that of the matrix $A_1$. The matrix $A_1$ is a matrix wherein the first row is eliminated from an Hadamard's matrix of order 8. The total number of selection voltage vectors is 16. Table 2 shows selection codes sequentially representing applied voltage wherein the applied voltage $V_r$ is designated by "+", and the applied voltage $-V_r$, "-". However, in the actual application, selection is performed by selecting the successive row electrode subgroups sequentially one after another, thereby preventing the relaxation phenomena of a liquid crystal.

Table 2

|        | 1 | 2 | 3 | 4 | 5 | 6 | 7 | 8 | 9 | 10 | 11 | 12 | 13 | 14 | 15 | 16 |
|--------|---|---|---|---|---|---|---|---|---|----|----|----|----|----|----|----|
| Row 1  | + | - | + | - | + | - | + | - | - | +  | -  | +  | -  | +  | -  | +  |
| Row 2  | + | + | - | - | + | + | - | - | - | -  | +  | +  | -  | -  | +  | +  |
| Row 3  | + | - | - | + | + | - | - | + | - | +  | +  | -  | -  | +  | +  | -  |
| Rwo 4  | + | + | + | + | - | - | - | - | - | -  | -  | -  | +  | +  | +  | +  |
| Row 5  | + | - | + | - | - | + | - | + | - | +  | -  | +  | +  | -  | +  | -  |
| Row 6  | + | + | - | - | - | - | + | + | - | -  | +  | +  | +  | +  | -  | -  |
| Row 7  | + | - | - | + | - | + | + | - | - | +  | +  | -  | +  | -  | -  | +  |

Time periods corresponding to numbers allotted to the selection codes of Table 2 are designated by tl through t16, respectively. Voltages applied to column electrodes during the time periods are in proportion to the following $C_{t1}$ through $C_{t16}$, thereby providing a maximum contrast ratio.

$$C_{t1} = g_0 + g_1 + g_2 + g_3 + g_4 + g_5 + g_6 + g_7$$

$$C_{t2} = g_0 - g_1 + g_2 - g_3 + g_4 - g_5 + g_6 - g_7$$

$$C_{t3} = g_0 + g_1 - g_2 - g_3 + g_4 + g_5 - g_6 - g_7$$

$$C_{t4} = g_0 - g_1 - g_2 + g_3 + g_4 - g_5 - g_6 + g_7$$

$$C_{t5} = g_0 + g_1 + g_2 + g_3 - g_4 - g_5 - g_6 - g_7$$

$$C_{t6} = g_0 - g_1 + g_2 - g_3 - g_4 + g_5 - g_6 + g_7$$

$$C_{t7} = g_0 + g_1 - g_2 - g_3 - g_4 - g_5 + g_6 + g_7$$

$$C_{t8} = g_0 - g_1 - g_2 + g_3 - g_4 + g_5 + g_6 - g_7$$

$$C_{t9} = -C_{t1}$$

$$C_{t10} = -C_{t2}$$

$$C_{t11} = -C_{t3}$$

$$C_{t12} = -C_{t4}$$

$$C_{t13} = -C_{t5}$$

$$C_{t14} = -C_{t6}$$

$$C_{t15} = -C_{t7}$$

$$C_{t16} = -C_{t8}$$

where $g_1$ through $g_7$ designate respective gray shade levels of the seven column electrodes, which are the value normalized between -1 and 1, as mentioned above. 32 gray shades are selected in this example.

Further,

$$g_0 = (7 - (g_1{}^2 + g_2{}^2 + g_3{}^2 + g_4{}^2 + g_5{}^2 + g_6{}^2 + g_7{}^2))^{1/2} \tag{18}.$$

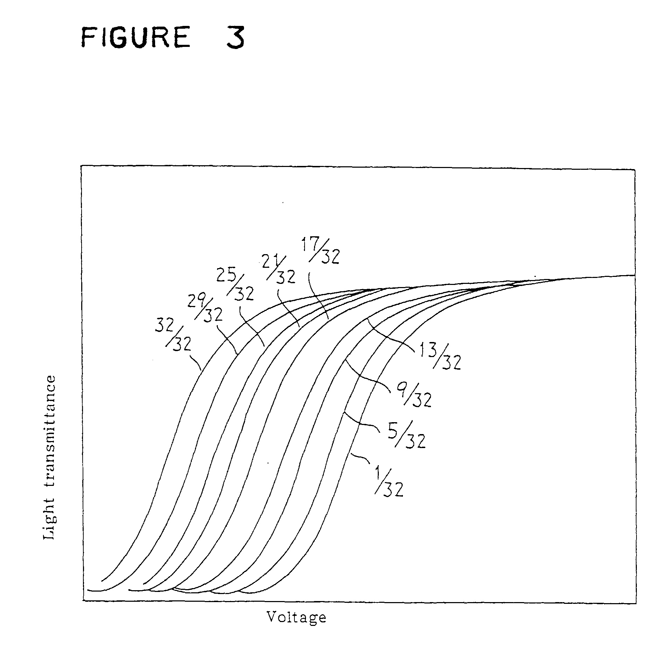

Figure 3 shows the light transmittance-applied voltage curves in this case. This example is performed with respect to the 32 gray shades. However, the graphs having the gray shades of an off state, 1st, 5th, 9th, 13th, 17th, 21st, 25th, 29th and 32nd are extracted and shown, for the easy observation of the diagram. In the diagram, i/32 designates that the graph is of the i-th gray shade level among 32 gray shade levels, which is counted from the off state. The abscissa is voltage and the ordinate, light transmittance.

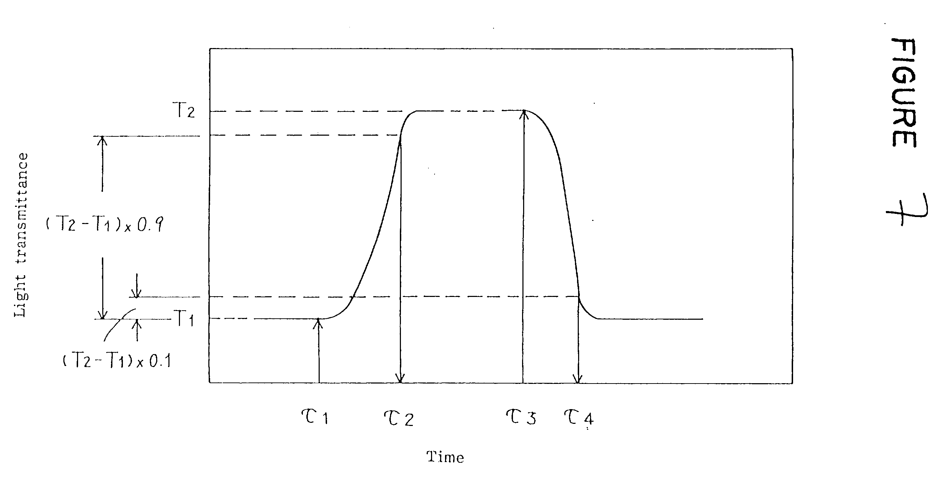

Further, response time for switching between various gray shades are shown in Tables 3 and 4. The response time in this case is defined in reference to Figure 7 as follows. Steady state of light transmittance of a gray shade level is designated by $T_1$, steady state of light transmittance of another gray shade level is designated by $T_2$, a time point wherein the first gray shade is switched to the second gray shade, $\tau_1$, a time point thereafter, when the light transmittance T is $(T_2 - T_1) \times 0.9 + T_1$, $\tau_2$, a time point wherein the second gray shade is switched to the first gray shade, conversely, $\tau_3$, and a time point thereafter the light transmittance T is $(T_2 - T_1) \times 0.1 + T_1$, $\tau_4$. Then, the response time in a rise is $\tau_{rise} = \tau_2 - \tau_1$, and the response time in a fall is $\tau_{fall} = \tau_4 - \tau_3$. Table 3 shows the rise time, and Table 4, the fall time. Further, Ri designates an i-th gray shade counted from the off state, among gray shades whereby the light transmittance is approximately divided into seven equal intervals between the off state and the on state.

The unit is msec.

Table 3

| R1 | 97 | 109 | 111 | 115 | 108 | 95 | 66 |
|----|----|-----|-----|-----|-----|----|----|
|    | R2 | 99  | 103 | 105 | 99  | 85 | 61 |
|    |    | R3  | 85  | 97  | 94  | 80 | 56 |
|    |    |     | R4  | 100 | 94  | 82 | 58 |
|    |    |     |     | R5  | 101 | 79 | 53 |
|    |    |     |     |     | R6  | 57 | 48 |
|    |    |     |     |     |     | R7 | 51 |
|    |    |     |     |     |     |    | R8 |

Table 4

| R1 | | | | | | | |
|---|---|---|---|---|---|---|---|
| 57 | R2 | | | | | | |
| 54 | 88 | R3 | | | | | |
| 51 | 84 | 83 | R4 | | | | |
| 52 | 84 | 92 | 104 | R5 | | | |
| 56 | 88 | 98 | 106 | 113 | R6 | | |
| 55 | 84 | 95 | 102 | 102 | 75 | R7 | |
| 60 | 86 | 97 | 104 | 101 | 90 | 82 | R8 |

The Tables 3 and 4 reveal that the response time changes by a ratio of approximately two at maximum.

EXAMPLE 2

An STN liquid crystal display element having a circuit construction similar to that in Example 1 wherein the mean response speed is 50 msec (at 25°C) at 2 gray shades, is driven by the driving method of this invention, wherein L=3, J=80, and K=4 with respect to 240 of the number N of column electrodes.

Table 5

$$A_2 = \begin{bmatrix} 1 & -1 & 1 & -1 \\ 1 & 1 & -1 & -1 \\ 1 & -1 & -1 & 1 \end{bmatrix}$$

As the selection voltage matrix, a matrix wherein a matrix $A_2$ shown in Table 5 and a matrix $-A_2$ wherein the sign of the element is reversed from that in the matrix $A_2$, are arranged, is employed. $A_2$ is a matrix wherein the first column is eliminated from a Hadamard's matrix of order 4. The number of a total of the selection voltage vectors is 8. Table 6 shows the selection codes wherein the applied voltage is sequentially shown in which the applied voltage $+V_r$ is designated by "+", and the applied voltage $-V_r$, "-". However, in the actual application, the voltage application is performed to a succeeding row electrode subgroup every time a voltage corresponding to a selection code is applied to a preceding row electrode subgroup, thereby preventing the relaxation phenomena of a liquid crystal.

Table 6

|       | 1 | 2 | 3 | 4 | 5 | 6 | 7 | 8 |
|-------|---|---|---|---|---|---|---|---|
| Row 1 | + | - | + | - | - | + | - | + |
| Row 2 | + | + | - | - | - | - | + | + |
| Row 3 | + | - | - | + | - | + | + | - |

Time periods respectively corresponding to numbers allotted to the selection codes of Table 6 are designated by t1 through t8. The voltages applied to the column electrodes in the time periods are in proportion to $C_{t1}$ through $C_{t8}$, to thereby provide a maximum contrast ratio.

$$C_{t1} = g_0 + g_1 + g_2 + g_3$$

$$C_{t2} = g_0 - g_1 + g_2 - g_3$$

$$C_{t3} = g_0 + g_1 - g_2 - g_3$$

$$C_{t4} = g_0 - g_1 - g_2 + g_3$$

$$C_{t5} = -C_{t1}$$

$$C_{t6} = -C_{t2}$$

$$C_{t7} = -C_{t3}$$

$$C_{t8} = -C_{t4}$$

where $g_1$ through $g_3$ designate the respective gray shade levels of three pieces of the row electrodes, which are the values normalized between -1 and 1, as mentioned above. 32 Gray shades are selected in this example.

Further,

$$g_0 = (3-(g_1{}^2 + g_2{}^2 + g_3{}^2))^{1/2} \qquad (19).$$

The display switching is performed at a high speed and a multi-level gray shades are provided by this method.

EXAMPLE 3

An STN liquid crystal display element having the average response time of 50 msec at 25°C between on and off states is driven by the driving method of this invention employing a circuit construction similar to that in Example 1, wherein L=3, J=80 and K=8, and hence the total number of row electrodes (N) is equal to 240.

Table 7

$$A_3 = \begin{bmatrix} 1 & -1 & 1 & -1 & -1 & 1 & -1 & 1 \\ 1 & 1 & -1 & -1 & -1 & -1 & 1 & 1 \\ 1 & -1 & -1 & 1 & -1 & 1 & 1 & -1 \end{bmatrix}$$

In this occasion, a matrix wherein a matrix $A_3$ shown in Table 7 and $-A_3$ are arranged, as the selection voltage matrix. $A_3$ is an orthogonal matrix including column vectors having elements of all the conceivable combination of +1 and -1. The number of a total of the selection voltage vector is 16. Table 8 shows the selection codes which sequentially show the applied voltage wherein the applied voltage $+V_r$ is designated by "+", and the applied voltage $-V_r$, "-". However, in the actual application, the voltage application is performed to a succeeding row electrode subgroup at every time a voltage corresponding to a selection code is applied to a preceding row electrode subgroup thereby preventing the relaxation phenomena of a liquid crystal.

Table 8

|  | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Row 1 | + | - | + | - | - | + | - | + | - | + | - | + | + | - | + | - |
| Row 2 | + | + | - | - | - | - | + | + | - | - | + | + | + | + | - | - |
| Row 3 | + | - | - | + | - | + | + | - | - | + | + | - | + | - | - | + |

Time periods respectively corresponding to numbers allotted to the selection codes of Table 8 are designated by t1 through t16. The voltage applied to the column electrode in the time period is in proportion to the following $C_{t1}$ through $C_{t16}$, to thereby provide a maximum contrast ratio.

$$C_{t1} = g_0 + g_1 + g_2 + g_3$$

$$C_{t2} = g_0 - g_1 + g_2 - g_3$$

$$C_{t3} = g_0 + g_1 - g_2 - g_3$$

EP 0 581 255 B1

$$C_{t4} = g_0 - g_1 - g_2 + g_3$$

$$C_{t5} = g_0 - g_1 - g_2 - g_3$$

$$C_{t6} = g_0 + g_1 - g_2 + g_3$$

$$C_{t7} = g_0 - g_1 + g_2 + g_3$$

$$C_{t8} = g_0 + g_1 + g_2 - g_3$$

$$C_{t9} = -C_{t1}$$

$$C_{t10} = -C_{t2}$$

$$C_{t11} = -C_{t3}$$

$$C_{t12} = -C_{t4}$$

$$C_{t13} = -C_{t5}$$

$$C_{t14} = -C_{t6}$$

$$C_{t15} = -C_{t7}$$

$$C_{t16} = -C_{t8}$$

In the above equations, $g_1$ through $g_3$ designate the respective gray shade levels of three pieces of the row electrodes, which are the values normalized between -1 and 1, as mentioned above. 32 Gray shades are selected also in this example.

Further,

$$g_0 = (3-(g_1^2 + g_2^2 + g_3^2))^{1/2} \qquad (20).$$

The display switching is performed at a high speed and multi-level gray shades having good brightness uniformity of display is provided by this method.

EXAMPLE 4

An STN liquid crystal display element having an average response time of 50 msec (at 25°C) between on and off states, is driven by the driving method of this invention employing the construction of Figures 4 and 6, wherein L=7, and J=35 and hence the total number of row electrodes (N) is equal to 245.

A matrix wherein the first row is eliminated from a Hadamard's matrix of order 8, is adopted as the selection voltage matrix. Table 9 shows the selection codes which sequentially represents the applied voltage wherein the applied voltage $+V_r$ is designated by "+", and the applied voltage $-V_r$, "-".

14

Table 9

|  | 1 | 2 | 3 | 4 | 5 | 6 | 7 | 8 |
|---|---|---|---|---|---|---|---|---|
| Row 1 | + | - | + | - | + | - | + | - |
| Row 2 | + | + | - | - | + | + | - | - |
| Row 3 | + | - | - | + | + | - | - | + |
| Row 4 | + | + | + | + | - | - | - | - |
| Row 5 | + | - | + | - | - | + | - | + |
| Row 6 | + | + | - | - | - | - | + | + |
| Row 7 | + | - | - | + | - | + | + | - |

Time periods corresponding to numbers allotted to the selection codes of Table 9 are designated by t1 through t8, respectively. The voltage applied to the column electrode in the above time period is in proportion to the following $C_{1,x}$ through $C_{8,x}$ (x=1 correspond to a first time slot, x=2, a second time slot), to thereby provide a maximum contrast ratio.

$$C_{1,1} = + G_{1,1} + G_{2,1} + G_{3,1} + G_{4,1} + G_{5,1} + G_{6,1} + G_{7,1}$$

$$C_{1,2} = + G_{1,2} + G_{2,2} + G_{3,2} + G_{4,2} + G_{5,2} + G_{6,2} + G_{7,2}$$

$$C_{2,1} = - G_{1,1} + G_{2,1} - G_{3,1} + G_{4,1} - G_{5,1} + G_{6,1} - G_{7,1}$$

$$C_{2,2} = - G_{1,2} + G_{2,2} - G_{3,2} + G_{4,2} - G_{5,2} + G_{6,2} - G_{7,2}$$

$$C_{3,1} = + G_{1,1} - G_{2,1} - G_{3,1} + G_{4,1} + G_{5,1} - G_{6,1} - G_{7,1}$$

$$C_{3,2} = + G_{1,2} - G_{2,2} - G_{3,2} + G_{4,2} + G_{5,2} - G_{6,2} - G_{7,2}$$

$$C_{4,1} = - G_{1,1} - G_{2,1} + G_{3,1} + G_{4,1} - G_{5,1} - G_{6,1} + G_{7,1}$$

$$C_{4,2} = - G_{1,2} - G_{2,2} + G_{3,2} + G_{4,2} - G_{5,2} - G_{6,2} + G_{7,2}$$

$$C_{5,1} = + G_{1,1} + G_{2,1} + G_{3,1} - G_{4,1} - G_{5,1} - G_{6,1} - G_{7,1}$$

$$C_{5,2} = + G_{1,2} + G_{2,2} + G_{3,2} - G_{4,2} - G_{5,2} - G_{6,2} - G_{7,2}$$

$$C_{6,1} = - G_{1,1} + G_{2,1} - G_{3,1} - G_{4,1} + G_{5,1} - G_{6,1} + G_{7,1}$$

$$C_{6,2} = - G_{1,2} + G_{2,2} - G_{3,2} - G_{4,2} + G_{5,2} - G_{6,2} + G_{7,2}$$

$$C_{7,1} = + G_{1,1} - G_{2,1} - G_{3,1} - G_{4,1} - G_{5,1} + G_{6,1} + G_{7,1}$$

$$C_{7,2} = + G_{1,2} - G_{2,2} - G_{3,2} - G_{4,2} - G_{5,2} + G_{6,2} + G_{7,2}$$

$$C_{8,1} = - G_{1,1} - G_{2,1} + G_{3,1} - G_{4,1} + G_{5,1} + G_{6,1} - G_{7,1}$$

$$C_{8,2} = - G_{1,2} - G_{2,2} + G_{3,2} - G_{4,2} + G_{5,2} + G_{6,2} - G_{7,2}$$

where

$$G_{n,1} = \alpha_{in}(d_{(j\cdot L+i),k} + (1-d_{(j\cdot L+i),k}^{2})^{1/2}) \tag{21}$$

$$G_{n,2} = \alpha_{in}(d_{(j\cdot L+i),k} - (1-d_{(j\cdot L+i),k}^{2})^{1/2}) \tag{22}$$

In the actual voltage application, at every time a voltage corresponding to a first time slot is applied to a preceding row electrode subgroup, the voltage application is performed to a succeeding row electrode subgroup, to thereby prevent the relaxation phenomena of a liquid crystal.

According to the present invention, a multi-level gray shade display can be performed with a small variation of the frequency components across the pixels. The amplitude modulation can be used in combination with MLS method which has already been proposed by the applicants to drive fast responding LCDs.

According to the method of this invention, the invention is provided with a merit of simplifying the circuit construction with the number of time intervals in a cycle being twice that of the conventional technique.

Further, it is clear that the driving method of this invention is not limited to a liquid crystal display element, and can be employed in a display element, so far as the light transmittance of a pixel selected by a row electrode and a column electrode changes in accordance with a difference of voltage applied on the row electrode and the column electrode.

## Claims

1. A method of driving a display element having a plurality of column electrodes and a plurality of row electrodes wherein a light transmittance of a pixel positioned at the intersection between a column electrode and a row electrode changes in accordance with an effective voltage applied to the pixel,

   voltages proportional to row elements of a column of an orthogonal matrix $\{\alpha\}$, which matrix has no relation to data to be displayed and the total row number of which is L being larger than 1 and the total column number of which is an optional integer as long as orthogonality thereof is maintained, are applied sequentially, with respect to all columns of the orthogonal matrix, to the row electrodes of row electrode subgroups which are a set of the L number of row electrodes to be selected simultaneously, which number of L is the same number as the total row number $\{\alpha\}$,

   the method being characterized in that:

   when said pixel is positioned at the intersection between the i-th row electrode in the j-th row electrode subgroup and the k-th column electrode where i is an integer between 1 and L, j is an integer between 1 and the number of row electrode subgroups in the display element and k is an integer between 1 and the number of column electrodes in the display element; and display data to be displayed on said pixel is $d_{((j-1)^*L+i),k}$ where $d_{((j-1)^*L+i),k}$ is a number between -1 and 1, ON-state is designated by -1, and OFF-state is designated by 1, said pixel is displayed by applying a voltage proportional to a row element of the n-th column of the orthogonal matrix $\{\alpha\}$ to the row electrode of said pixel and a voltage proportional to both $V_{d1,n}$ and $V_{d2,n}$ is sequentially applied to the column electrode of said pixel, and $V_{d1,n}$ and $V_{d2,n}$ are expressed by the following equations, where $\alpha_{in}$ designates an element of the i-th row and the n-th column of the orthogonal matrix $\{\alpha\}$:

$$V_{d1,n} = \sum_{i=1}^{L} \{\alpha_{in}(d_{((j-1)\cdot L+i),k} + (1-d_{((j-1)*L+i),k}^2)^{1/2})\}$$

$$V_{d2,n} = \sum_{i=1}^{L} \{\alpha_{in}(d_{((j-1)\cdot L+i),k} - (1-d_{((j-1)*L+i),k}^2)^{1/2})\} \ .$$

**2.** The method of driving a display element according to Claim 1, wherein the number L of the simultaneously selected row electrodes satisfies the condition $L = 2^p-1$, where p is an integer greater than 1.

**3.** The method of driving a display element according to Claim 1, wherein the display element is a liquid crystal display element.

**4.** The method of driving a display element according to Claim 3, wherein selected pulses are dispersingly applied on the row electrodes in the single display cycle to thereby prevent relaxation phenomena of a liquid crystal.

**5.** The method of driving a display element according to Claim 3, wherein $V_{d1,n}$ and $V_{d2,n}$ are dispersingly applied to the column electrodes in two display cycles to thereby prevent relaxation phenomena of a liquid crystal.

**6.** A driving device for driving a display element wherein a light transmittance of a pixel selected by a row electrode and a column electrode changes in accordance with a difference between voltages applied on the row electrode and the column electrode, wherein row electrodes are divided into a plurality of row electrode subgroups composed of L row electrodes which are selected simultaneously wherein L is an integer greater than 1;
wherein a column signal generating device (2) in the driving device comprises the following elements to provide a predetermined gray shade level $d_{((j-1)\cdot L+i),k}$ which is a value between 1 showing an off state and -1 showing an on state in accordance with a degree of gray shade with respect to a pixel of a k-th column where k is an integer and an i-th row where i is an integer of 1 through L of a j-th row electrode subgroup where j is an integer:

(1) a first function generating means (16) for generating a first function of

$$F_{i1} = d_{((j-1)\cdot L+i),k} + (1-d_{((j-1)\cdot L+i),k}^2)^{1/2}$$

with respect to a display data $d_{((j-1)\cdot L+i),k}$ corresponding to a predetermined gray shade level;
(2) a second function generating means (17) for generating a second function of

$$F_{i2} = d_{((j-1)\cdot L+i),k} - (1-d_{((j-1)\cdot L+i),k}^2)^{1/2}$$

by inputting the display data $d_{((j-1)\cdot L+i),k}$ corresponding to a predetermined gray shade level;
(3) a sign determining means (18) for determining signs of $F_{i1}$ and $F_{i2}$ in accordance with an orthogonal function signal $[\alpha_{mn}]$ where $\alpha_{mn}$ is an element of a m-th row component and a n-th column component of an orthogonal matrix, m is an integer of 1 through L and n is a suffix showing that the n-th column component of the orthogonal matrix corresponds to a n-th selection signal in a single display cycle;
(4) a switching means (20) for switching outputs of the first and the second function determining means of which signs are to be determined by the sign determining means (18) at a predetermined timing; and
(5) an adding means (19) for adding $F_{i1}$ and $F_{i2}$ of which signs have been determined by the sign determining means (18),

such that a voltage proportional to both $V_{d1,n}$ and $V_{d2,n}$ is sequentially applied to the column electrode of said pixel, wherein
$V_{d1,n}$ and $V_{d2,n}$ are expressed by the following equations, where $\alpha_{in}$ designates an element of the i-th row and the n-th column of the orthogonal matrix $\{\alpha\}$:

$$V_{d1,n} = \sum_{i=1}^{L} \{\alpha_{in} F_{i1}\}$$

$$V_{d2,n} = \sum_{i=1}^{L} \{\alpha_{in} F_{i2}\} \ .$$

7. The driving device of a display element according to Claim 6, wherein the first or the second function generating means is constructed by random logic gates and the switching means is constructed by an AND-OR gate.

8. The driving device of a display element according to Claim 6, wherein the first or the second function generating means is constructed by means for storing a result of calculation corresponding to a predetermined gray shade level into a ROM and the switching means is constructed by a means for switching an address with respect to the ROM in reading.

9. The driving device of a display element according to Claim 6, wherein the display element is a liquid crystal display element.

10. The driving device according to Claim 6, characterized by a row signal generating device (3) for generating substantially orthogonal signals which, in use, are applied to L row electrodes simultaneously wherein L is an integer greater than 1.


**Patentansprüche**

1. Verfahren zum Ansteuern eines Anzeigeelements mit einer Anzahl von Spaltenelektroden und einer Anzahl von Zeilenelektroden, wobei sich die Lichttransmission eines am Schnittpunkt zwischen einer Spaltenelektrode und einer Zeilenelektrode liegenden Pixels entsprechend der am Pixel anliegenden Effektivspannung ändert;

- wobei Spannungen proportional zu Zeilenelementen einer Spalte einer orthogonalen Matrix $\{\alpha\}$, die keine Beziehung zu anzuzeigenden Daten hat und deren Gesamtzeilenanzahl L größer als 1 ist und deren Gesamtspaltenanzahl eine wahlfreie ganze Zahl ist, solange ihre Orthogonalität aufrechterhalten bleibt, sequentiell, hinsichtlich aller Spalten der orthogonalen Matrix, an die Zeilenelektroden von Zeilenelektroden-Untergruppen, die einen Satz der Anzahl L der sequentiell auszuwählenden Zeilenelektroden bilden, angelegt werden, wobei die Anzahl L dieselbe Zahl wie die Gesamtzeilenanzahl $\{\alpha\}$ ist;

**dadurch gekennzeichnet, dass**

- dann, wenn das Pixel am Schnittpunkt zwischen der Zeilenelektrode i in der Zeilenelektroden-Untergruppe j und der Spaltenelektrode k liegt, wobei i eine ganze Zahl zwischen 1 und L ist, j eine ganze Zahl zwischen 1 und der Anzahl von Zeilenelektroden-Untergruppen im Anzeigeelement ist, und k eine ganze Zahl zwischen 1 und der Anzahl von Spaltenelektroden im Anzeigeelement ist; und wenn ein an diesem Pixel anzuzeigender Anzeigedatenwert $d_{(j \cdot L+i),k}$ ist, wobei $d_{(j \cdot L+i),k}$ eine Zahl zwischen -1 und 1 ist, wobei der Ein-Zustand mit -1 bezeichnet ist und der Aus-Zustand mit 1 bezeichnet ist,

-- das Pixel dadurch angezeigt wird, dass eine Spannung proportional zu einem Zeilenelement der Spalte n der orthogonalen Matrix $\{\alpha\}$ an die Zeilenelektrode des Pixels angelegt wird, während eine Spannung proportional sowohl zu $V_{d1,n}$ als auch $V_{d2,n}$ sequentiell an die Spaltenelektrode des Pixels angelegt wird; und

-- wobei $V_{d1,n}$ und $V_{d2,n}$ durch die folgenden Gleichungen ausgedrückt sind, wobei $\alpha_{in}$ das Element der Zeile i und der Spalte n der orthogonalen Matrix $\{\alpha\}$ bezeichnet:

$$V_{d1,n} = \sum_{i=1}^{L} \{\alpha_{in}(d_{((j-1)\cdot L+i),k} + (1-d_{((j-1)\cdot L+i),k}^{2})^{1/2})\}$$

$$V_{d2,n} = \sum_{i=1}^{L} \{\alpha_{in}(d_{((j-1)\cdot L+i),k} - (1-d_{((j-1)\cdot L+i),k}^{2})^{1/2})\} \; .$$

**2.** Verfahren zum Ansteuern eines Anzeigeelements nach Anspruch 1, bei dem die Anzahl L gleichzeitig ausgewählter Zeilenelektroden der Bedingung L = 2$^p$-1 genügt, wobei p eine ganze Zahl größer als 1 ist.

**3.** Verfahren zum Ansteuern eines Anzeigeelements nach Anspruch 1, bei dem das Anzeigeelement ein Flüssigkristall-Anzeigeelement ist.

**4.** Verfahren zum Ansteuern eines Anzeigeelements nach Anspruch 3, bei dem ausgewählte Impulse in einem einzelnen Anzeigezyklus verteilt an die Zeilenelektroden angelegt werden, um dadurch den Relaxationseffekt von Flüssigkristallen zu vermeiden.

**5.** Verfahren zum Ansteuern eines Anzeigeelements nach Anspruch 3, bei dem $V_{d1,n}$ und $V_{d2,n}$ in zwei Anzeigezyklen verteilt an die Spaltenelektroden angelegt werden, um dadurch den Relaxationseffekt von Flüssigkristallen zu vermeiden.

**6.** Ansteuerungsvorrichtung zum Ansteuern eines Anzeigeelements, bei dem sich die Lichttransmission eines durch eine Zeilenelektrode und eine Spaltenelektrode ausgewählten Pixels entsprechend der Differenz zwischen an die Zeilenelektrode und die Spaltenelektrode angelegten Spannungen ändert, wobei die Zeilenelektroden in eine Anzahl von Zeilenelektroden-Untergruppen unterteilt sind, die aus L gleichzeitig ausgewählten Zeilenelektroden bestehen, wobei L eine ganze Zahl größer als 1 ist;

   - wobei eine Spaltensignal-Erzeugungseinrichtung (2) in der Ansteuerungsvorrichtung die folgenden Elemente umfasst, um einen vorbestimmten Graustufenpegel $d_{((j-1)\cdot L+i),k}$ zu erzeugen, der ein Wert zwischen 1, der den Aus-Zustand bezeichnet, und -1, der den Ein-Zustand bezeichnet, ist, entsprechend dem Graustufenpegel in bezug auf ein Pixel einer Spalte k, wobei k eine ganze Zahl ist, und einer Zeile i, wobei i eine ganze Zahl von 1 bis L einer Zeilenelektroden-Untergruppe j ist, wobei j eine ganze Zahl ist, mit:

      (1) einer ersten Funktionsgeneratoreinrichtung (16) zum Erzeugen einer ersten Funktion

$$F_{i1} = d_{((j-1)\cdot L+i),k} + (1-d_{((j-1)\cdot L+i),k}^{2})^{1/2}$$

      hinsichtlich eines Anzeigedatenwerts $d_{((j-1)\cdot L+i),k}$ entsprechend einem bestimmten Graustufenpegel;
      (2) einer zweiten Funktionsgeneratoreinrichtung (17) zum Erzeugen einer zweiten Funktion

$$F_{i2} = d_{((j-1)\cdot L+i),k} - (1-d_{((j-1)\cdot L+i),k}^{2})^{1/2}$$

      durch Eingeben des Anzeigedatenwerts $d_{((j-1)\cdot L+i),k}$ entsprechend einem vorbestimmten Graustufenpegel;
      (3) einer Vorzeichen-Bestimmungseinrichtung (18) zum Bestimmen der Vorzeichen von $F_{i1}$ und $F_{i2}$ entsprechend einem orthogonalen Funktionssignal $[\alpha_{mn}]$, wobei $\alpha_{mn}$ das Element der Zeilenkomponente m und der Spaltenkomponente n einer orthogonalen Matrix ist, wobei m eine ganze Zahl von 1 bis L ist und n ein Suffix ist, der anzeigt, dass die Spaltenkomponente n der orthogonalen Matrix dem Auswählsignal n in einem einzelnen Anzeigezyklus entspricht;
      (4) einer Umschalteinrichtung (20) zum Umschalten der Ausgangssignale der ersten und zweiten Funktionsgeneratoreinrichtung, deren Vorzeichen zu einem vorbestimmten Zeitpunkt durch die Vorzeichen-Bestimmungseinrichtung (18) zu bestimmen sind; und

(5) einer Addiereinrichtung (19) zum Addieren von $F_{i1}$ und $F_{i2}$, deren Vorzeichen durch die Vorzeichen-Bestimmungseinrichtung (18) bestimmt wurden, in solcher Weise, dass an die Spaltenelektrode des Pixels sequentiell eine Spannung proportional zu sowohl $V_{d1,n}$ als auch $V_{d2,n}$ angelegt wird, wobei $V_{d1,n}$ und $V_{d2,n}$ durch die folgenden Gleichungen ausgedrückt sind, wobei $\alpha_{in}$ das Element der Zeile i und der Spalte n der orthogonalen Matrix $\{\alpha\}$ bezeichnet:

$$V_{d1,n} = \sum_{i=1}^{L} \{\alpha_{in} F_{i1}\}$$

$$V_{d2,n} = \sum_{i=1}^{L} \{\alpha_{in} F_{i2}\} \ .$$

**7.** Ansteuerungsvorrichtung für ein Anzeigeelement nach Anspruch 6, bei der die erste und die zweite Funktionsgeneratoreinrichtung aus Zufallslogikgattern aufgebaut ist und die Umschalteinrichtung aus einem UND-ODER-Gatter aufgebaut ist.

**8.** Ansteuerungsvorrichtung für ein Anzeigeelement nach Anspruch 6, bei der die erste oder zweite Funktionsgeneratoreinrichtung aus einer Einrichtung zum Einspeichern eines Rechenergebnisses entsprechend einem vorbestimmten Graustufenpegel in einen ROM aufgebaut ist, und die Umschalteinrichtung durch eine Einrichtung zum Umschalten einer Adresse hinsichtlich des ROM bei einem Lesevorgang aufgebaut ist.

**9.** Ansteuerungsvorrichtung für ein Anzeigeelement nach Anspruch 6, bei der das Anzeigeelement ein Flüssigkristall-Anzeigeelement ist.

**10.** Ansteuerungsvorrichtung nach Anspruch 6, **gekennzeichnet durch** eine Zeilensignal-Generatoreinrichtung (3) zum Erzeugen im wesentlichen orthogonaler Signale, die, im Gebrauch, gleichzeitig an L Zeilenelektroden angelegt werden, wobei L eine ganze Zahl größer als 1 ist.

**Revendications**

**1.** Méthode de commande d'un élément d'affichage comportant plusieurs électrodes de colonne et plusieurs électrodes de rangée, selon laquelle un coefficient de transmission de la lumière d'un pixel situé à l'intersection d'une électrode de colonne et d'une électrode de rangée varie en fonction d'une tension effective appliquée au pixel,

et selon laquelle des tensions proportionnelles à des éléments de rangée d'une colonne d'une matrice orthogonale $\{\alpha\}$, matrice qui est sans rapport avec des données destinées à être affichées et dont le nombre total de rangées L est supérieur à 1 et le nombre total de colonnes est un entier au choix dans la mesure où son orthogonalité est maintenue, sont appliquées séquentiellement, en ce qui concerne toutes les colonnes de la matrice orthogonale, aux électrodes de rangée de sous-groupes d'électrodes de rangée qui constituent un ensemble du nombre L d'électrodes de rangée devant être sélectionnées simultanément, lequel nombre L est le même que le nombre total de rangées $\{\alpha\}$,

la méthode étant caractérisée en ce que :

lorsque ledit pixel est situé à l'intersection de la ième électrode de rangée du jième sous-groupe d'électrodes de rangée et de la kième électrode de colonne, i étant un entier entre 1 et L, j un entier entre 1 et le nombre de sous-groupes d'électrodes de rangée de l'élément d'affichage, et k un entier entre 1 et le nombre d'électrodes de colonne de l'élément d'affichage; et que des données d'affichage destinées à être affichées sur ledit pixel sont $d_{((j-1)*L+i),k}$, $d_{((j-1)*L+i),k}$ étant un nombre entre -1 et 1, un état ACTIVE étant désigné par -1, et un état DESACTIVE par 1,

ledit pixel est affiché par l'application d'une tension proportionnelle à un élément de rangée de la nième colonne de la matrice orthogonale {α} à l'électrode de rangée dudit pixel, et une tension proportionnelle à la fois à $V_{d1,n}$ et à $V_{d2,n}$ est appliquée séquentiellement à l'électrode de colonne dudit pixel, et en ce que

$V_{d1,n}$ et $V_{d2,n}$ sont exprimées par les équations suivantes, dans lesquelles $\alpha_{in}$ désigne un élément de la ième rangée et de la nième colonne de la matrice orthogonale {α} :

$$V_{d1,n} = \sum_{i=1}^{L} \{\alpha_{in}(d_{((j-1)\cdot L+i),k} + (1-d_{((j-1)*L+i),k}^2)^{1/2})\}$$

$$V_{d2,n} = \sum_{i=1}^{L} \{\alpha_{in}(d_{((j-1)\cdot L+i),k} - (1-d_{((j-1)*L+i),k}^2)^{1/2})\} \ .$$

2. Méthode de commande d'un élément d'affichage selon la revendication 1, suivant laquelle le nombre L des électrodes de rangée sélectionnées simultanément satisfait la condition $L = 2^p-1$, dans laquelle p est un entier supérieur à 1.

3. Méthode de commande d'un élément d'affichage selon la revendication 1, suivant laquelle l'élément d'affichage est un élément d'affichage à cristaux liquides.

4. Méthode de commande d'un élément d'affichage selon la revendication 3, suivant laquelle des impulsions sélectionnées sont appliquées de manière dispersée sur les électrodes de rangée au cours du cycle d'affichage unique pour ainsi éviter des phénomènes de relaxation de cristaux liquides.

5. Méthode de commande d'un élément d'affichage selon la revendication 3, suivant laquelle $V_{d1,n}$ et $V_{d2,n}$ sont appliquées de manière dispersée aux électrodes de colonne au cours de deux cycles d'affichage pour ainsi éviter des phénomènes de relaxation de cristaux liquides.

6. Dispositif de commande pour commander un élément d'affichage dans lequel un coefficient de transmission de la lumière d'un pixel sélectionné par une électrode de rangée et une électrode de colonne varie en fonction d'une différence entre des tensions appliquées à l'électrode de rangée et à l'électrode de colonne, dans lequel des électrodes de rangée sont divisées en plusieurs sous-groupes d'électrodes de rangée composés de L électrodes de rangée sélectionnées simultanément, L étant un entier supérieur à 1;

dans lequel un dispositif générateur de signaux de colonne (2) du dispositif de commande comprend les éléments suivants pour fournir un niveau de ton de gris prédéterminé $d_{((j-1)\cdot L+i),k}$ qui représente une valeur entre 1 indiquant un état désactivé et -1 indiquant un état activé en fonction d'un degré de ton de gris concernant un pixel d'une kième colonne, k étant un entier, et d'une ième rangée, i étant un entier de 1 à L, d'un jième sous-groupe d'électrodes de rangée, j étant un entier :

(1) un premier moyen générateur de fonction (16) destiné à générer une première fonction de

$$F_{i1} = d_{((j-1)\cdot L+i),k} + (1-d_{((j-1)\cdot L+i),k}^2)^{1/2}$$

en ce qui concerne des données d'affichage $d_{((j-1)\cdot L+i),k}$ correspondant à un niveau de ton de gris prédéterminé;
(2) un second moyen générateur de fonction (17) destiné à générer une seconde fonction de

$$F_{i2} = d_{((j-1)\cdot L+i),k} - (1-d_{((j-1)\cdot L+i),k}^2)^{1/2}$$

en recevant en entrée les données d'affichage $d_{((j-1)\cdot L+i),k}$ correspondant à un niveau de ton de gris prédéterminé;

(3) un moyen de détermination de signes (18) destiné à déterminer les signes de $F_{i1}$ et $F_{i2}$ conformément à un signal de fonction orthogonale $\{\alpha_{mn}\}$, $\alpha_{mn}$ étant un élément d'un mième composant de rangée et d'un nième composant de colonne d'une matrice orthogonale, m étant un entier de 1 à L et n un suffixe indiquant que le nième composant de colonne de la matrice orthogonale correspond à un nième signal de sélection d'un cycle d'affichage unique;

(4) un moyen commutateur (20) destiné à commuter des sorties des premier et second moyens générateurs de fonction, dont les signes doivent être déterminés par le moyen de détermination de signes (18) à un moment prédéterminé; et

(5) un moyen additionneur (19) destiné à additionner $F_{i1}$ et $F_{i2}$ dont les signes ont été déterminés par le moyen de détermination de signes (18),

afin qu'une tension proportionnelle à la fois à $V_{d1,n}$ et à $V_{d2,n}$ soit appliquée séquentiellement à l'électrode de colonne dudit pixel, et dans lequel

$V_{d1,n}$ et $V_{d2,n}$ sont exprimées par les équations suivantes, dans lesquelles $\alpha_{in}$ désigne un élément de la ième rangée et de la nième colonne de la matrice orthogonale $\{\alpha\}$ :

$$V_{d1,n} = \sum_{i=1}^{L} \{\alpha_{in} F_{i1}\}$$

$$V_{d2,n} = \sum_{i=1}^{L} \{\alpha_{in} F_{i2}\} \; .$$

**7.** Dispositif de commande d'un élément d'affichage selon la revendication 6, dans lequel le premier ou le second moyen générateur de fonction est constitué par des portes logiques aléatoires, et le moyen commutateur est constitué par une porte ET-OU.

**8.** Dispositif de commande d'un élément d'affichage selon la revendication 6, dans lequel le premier ou le second moyen générateur de fonction est constitué par un moyen servant à stocker un résultat de calcul correspondant à un niveau de ton de gris prédéterminé dans une mémoire ROM, et le moyen commutateur est constitué par un moyen servant à commuter une adresse concernant la mémoire ROM en cours de lecture.

**9.** Dispositif de commande d'un élément d'affichage selon la revendication 6, dans lequel l'élément d'affichage est un élément d'affichage à cristaux liquides.

**10.** Dispositif de commande d'un élément d'affichage selon la revendication 6, caractérisé par un dispositif générateur de signaux de rangée (3) servant à générer des signaux sensiblement orthogonaux qui, en service, sont appliqués à L électrodes de rangée simultanément, L étant un entier supérieur à 1.

# FIGURE 1

Row electrode

$+V_r$
$O$
$-V_r$

Column electrode

$O$

$( g_1 + k ) V_c$

$- ( g_1 - k ) V_c$

$( g_1 - k ) V_c$

$- ( g_1 + k ) V_c$

# FIGURE 2

Row electrode

$+V_r$
$O$
$-V_r$

Column electrode

$O$

$( g_1 + k ) V_c$

$- ( g_1 - k ) V_c$

$( g_1 - k ) V_c$

$- ( g_1 + k ) V_c$

# FIGURE 3

# FIGURE 4

FIGURE 5

FIGURE 6

L=7, N=245, 32GRAY, r=7

FIGURE 7